# EUROPÄISCHE PATENTSCHRIFT

(11) **EP 4 077 788 B1**
(45) Veröffentlichungstag und Bekanntmachung des Hinweises auf die Patenterteilung: **26.06.2024**
(21) Anmeldenummer: 20821212.6
(22) Anmeldetag: 11.12.2020
(51) Int. Cl.: D04H 3/013, D01D 5/06, D04H 3/02

(54) **VERFAHREN ZUR HERSTELLUNG VON CELLULOSISCHEM SPINNVLIES**
METHOD FOR PRODUCING CELLULOSIC SPUN-BONDED FABRIC
PROCÉDÉ DE FABRICATION DE NON-TISSÉ CÉLLULOSIQUE

(30) Priorität: 17.12.2019 EP 19217032
(43) Veröffentlichungstag der Anmeldung: 26.10.2022
(73) Patentinhaber: Lenzing Aktiengesellschaft, 4860 Lenzing (AT)
(72) Erfinder: SAGERER-FORIC, Ibrahim, 4840 Vöcklabruck (AT)
(74) Vertreter: Schwarz & Partner Patentanwälte GmbH
(86) Internationale Anmeldenummer: PCT/EP2020/085770
(87) Internationale Veröffentlichungsnummer: WO 2021/122377

(56) Entgegenhaltungen:
- EP-A1- 3 385 435
- WO-A1-2018/184038
- US-A- 5 589 125

## Beschreibung

Die vorliegende Erfindung betrifft ein Verfahren zur Herstellung von cellulosischem Spinnvlies, bei dem eine Spinnmasse durch eine Vielzahl von Düsenlöchern zu Filamenten extrudiert wird, die Filamente in Extrusionsrichtung verstreckt, durch Beaufschlagung mit einem eine Koagulationsflüssigkeit aufweisenden Koagulationsluftstrom zumindest teilweise ausgefällt und zur Bildung des Spinnvlieses abgelegt werden.

### Stand der Technik

Aus dem Stand der Technik ist die Herstellung von Spinnvliesen bzw. Vliesstoffen einerseits nach dem Spunbond- und andererseits nach dem Meltblown-Verfahren bekannt. Beim Spunbond-Verfahren (bspw. GB 2 114 052 A oder EP 3 088 585 A1) werden die Filamente durch eine Düse extrudiert und durch eine darunterliegende Verstreckungseinheit abgezogen und verstreckt. Beim Meltblown-Verfahren dagegen (bspw. US 5,080,569 A, US 4,380,570 A oder US 5,695,377 A) werden die extrudierten Filamente bereits beim Austritt aus der Düse von heißer, schneller Prozessluft mitgerissen und verstreckt. Bei beiden Technologien werden die Filamente auf einer Ablagefläche, beispielsweise einem perforierten Förderband, in Wirrlage zu einem Vliesstoff abgelegt, zu Nachbearbeitungsschritten transportiert und schließlich als Vliesrollen aufgewickelt.

Aus der US 3,755,527 A ist weiter beispielsweise eine Anlage zur Herstellung von thermoplastischen Vliesen nach dem Meltblown-Verfahren bekannt, wobei der Abstand zwischen Spinndüse und Ablage des Vlieses verändert werden kann. Auch aus der DE 199 13 162 C1 ist eine Anlage zur Herstellung von Vliesstoffen nach dem Meltblown-Verfahren mit zwischen Spinndüse und Ablage veränderbarem Abstand bekannt, wobei zudem Spinndüse und Ablage in ihrem Winkel zueinander verändert werden können. Durch Variation des Abstandes bzw. des Winkels zwischen Spinndüse und Ablage können die mechanischen und inneren Eigenschaften des Vliesstoffes verändert und angepasst werden.

Auch ist es aus dem Stand der Technik bekannt cellulosische Spinnvliese gemäß der Spundbond-Technologie (bspw. US 8,366,988 A) und gemäß Meltblown-Technologie (bspw. US 6,358,461 A und US 6,306,334 A) herzustellen. Dabei wird eine Lyocell-Spinnmasse entsprechend den bekannten Spundbond- oder Meltblownverfahren extrudiert und verstreckt, vor der Ablage zu einem Vlies werden die Filamente allerdings noch zusätzlich mit einem Koagulationsmittel in Kontakt gebracht, um die Zellulose zu regenerieren und formstabile Filamente zu erzeugen. Die nassen Filamente werden schließlich in Wirrlage als Vliesstoff abgelegt.

Verfahren zur Herstellung cellulosischer Spinnvliese benötigen allerdings im Vergleich zu Verfahren zur Herstellung von thermoplastischen Spinnvliesen zu deren Durchführung technisch aufwändige und entsprechend groß dimensionierte Anlagen, insbesondere um die Lyocell-Spinnmassen herstellen und transportieren zu können. Besonders die SpinnmasseLeitungen zwischen Spinnmasseherstellung und Spinndüsen müssen entsprechend massiv ausgeführt werden, da diese extrem hohen Leitungsdrücken standhalten müssen. Die zuvor genannten für thermoplastische Spinnvliese entwickelten Lösungsvorschläge zur Anpassung der mechanischen Eigenschaften der erhaltenen Vliesstoffe kommen demnach für Verfahren zur Herstellung cellulosischer Spinnvliese nicht in Betracht. Insbesondere eine Variation des Abstands zwischen Spinndüsen und Ablage kann für cellulosische Spinnvliese nicht zum Einsatz kommen.

Aus dem Stand der Technik (WO 2018/184038 A1, EP 3 385 435 A1) sind Verfahren zur Herstellung von Spinnvlies bekannt, bei dem eine Spinnmasse durch eine Vielzahl von Düsenlöchern zu Filamenten extrudiert wird und die Filamente in Extrusionsrichtung verstreckt werden. Die Filamente werden nach der Extrusion mit einem eine Koagulationsflüssigkeit aufweisenden Koagulationsluftstrom beaufschlagt, und damit zumindest teilweise ausgefällt, und schließlich zur Bildung des Spinnvlieses abgelegt. Derartige Verfahren sind allerdings nicht in der Lage die Luftdurchlässigkeit des Spinnvlieses gezielt einzustellen und über die gesamte Produktion konstant zu halten.

### Offenbarung der Erfindung

Die Erfindung hat sich daher die Aufgabe gestellt, ein Verfahren zur Herstellung von cellulosischem Spinnvlies bereitzustellen, welches eine kostengünstige und technisch einfache Einstellung und ein zuverlässiges Konstanthalten der Luftdurchlässigkeit des Spinnvlieses ermöglicht.

Die Erfindung löst die gestellte Aufgabe dadurch, dass die Luftdurchlässigkeit des Spinnvlieses anhand zumindest eines Parameters des Koagulationsluftstroms eingestellt wird, indem die Ist-Luftdurchlässigkeit des Spinnvlieses gemessen, die Differenz zwischen Ist-Luftdurchlässigkeit und einer vordefinierten Soll-Luftdurchlässigkeit ermittelt und in Abhängigkeit der ermittelten Differenz zumindest ein Parameter des Koagulationsluftstroms verändert wird.

Der Erfindung liegt insbesondere zu Grunde, dass die Luftdurchlässigkeit des Spinnvlieses durch die Änderung zumindest eines Parameters des Koagulationsluftstroms eingestellt werden kann.

Dadurch kann ein technisch besonders einfaches Verfahren zur Herstellung eines Spinnvlieses mit angepasster Luftdurchlässigkeit bereitgestellt werden. Da auf eine Höhenverstellung der massiven Plattformen und Förderbänder verzichtet werden kann, kann das Verfahren ohne umfangreiche und teure konstruktive Veränderungen bestehender Spinnvlies-Anlagen durchgeführt werden und somit die Kosten als auch die Komplexität der Produktionsanlagen reduziert werden.

Durch die erfindungsgemäße Veränderung zumindest eines Parameters des Koagulationsluftstroms, welcher auf die extrudierten und verstreckten Filamente vor deren Ablage zu dem Spinnvlies einwirkt und diese zumindest teilweise koaguliert, kann überraschenderweise die Luftdurchlässigkeit des Spinnvlieses deutlich beeinflusst werden, ohne gleichzeitig andere mechanische Eigenschaften, wie etwa das Flächengewicht, zu verändern. Der Koagulationsluftstrom kann nämlich einerseits den Grad der Koagulation der extrudierten Filamente steuern, und somit für ein vermehrtes oder vermindertes Verkleben der Filamente sorgen, und andererseits den Grad der Verwirbelung der Filamente vor der Ablage zu dem Spinnvlies beeinflussen. Sowohl Verklebung als auch Verwirbelung können dabei maßgeblich für die Luftdurchlässigkeit des erhaltenen Spinnvlieses sein. Zudem kann der Koagulationsluftstrom in feinen Abstufungen und sehr rasch durch eine Vielzahl von Parametern variiert werden, was einen deutlichen Vorteil gegenüber den konventionellen Lösungen, insbesondere der mechanischen Verstellung der Produktionsanlage, bietet.

Erfindungsgemäß wird damit ein unerwarteter Spinnvliesablageeffekt erzielt, durch den die Luftdurchlässigkeit des Spinnvlieses zuverlässig beeinflusst werden kann, ohne den Durchsatz an Spinnmasse, das Flächengewicht des Spinnvlieses, den Verstreckungsluftstrom oder den Abstand zwischen Spinndüse und Ablagefläche zur Ablage der Filamente zu verändern, nämlich indem zumindest ein Parameter des Koagulationsluftstroms verändert wird. Es hat sich gezeigt, dass sich der Impuls des insbesondere seitlich unter der Spinndüse eingesprühten Koagulationsluftstroms auf den Filament-Vorhang aus verstreckten Filamenten so deutlich auswirkt, dass die Orientierung der Filamente vor dem Auftreffen auf die Ablagefläche deutlich beeinflusst werden. In Folge einer Veränderung der Orientierung der Filamente kann sich in weiterer Folge die innere Struktur des Spinnvlieses und damit auch die Luftdurchlässigkeit ändern.

Wird zudem die Ist-Luftdurchlässigkeit des Spinnvlieses gemessen, die Differenz zwischen Ist-Luftdurchlässigkeit und einer vordefinierten Soll-Luftdurchlässigkeit ermittelt und in Abhängigkeit der ermittelten Differenz zumindest ein Parameter des Koagulationsluftstroms verändert, so kann ein Spinnvlies besonders reproduzierbar und zuverlässig mit einer gewünschten Soll-Luftdurchlässigkeit erhalten werden. Es kann auf diese Weise eine Feedback-Schleife gebildet werden, wobei auf Abweichungen der gemessenen Ist-Luftdurchlässigkeit von einer vorgegebenen Soll-Luftdurchlässigkeit rasch reagiert werden kann. In Abhängigkeit der ermittelten Differenz kann nämlich eine Änderung eines oder mehrerer Parameter des Koagulationsluftstroms bestimmt werden, welche zu einer Änderung der Luftdurchlässigkeit führen, so dass die in weiterer Folge des Verfahrens die Differenz zwischen Ist-Luftdurchlässigkeit und Soll-Luftdurchlässigkeit geringer wird, bzw. sich die Ist-Luftdurchlässigkeit an die Soll-Luftdurchlässigkeit annähert.

Für die Zwecke der vorliegenden Erfindung wird festgehalten, dass unter einem Spinnvlies im Sinne der vorliegenden Offenbarung ein Vliesstoff verstanden wird, welcher direkt durch Ablage extrudierter Filamente gebildet wird, wobei die Filamente im Wesentlichen Endlosfilamente sind und in Wirrlage abgelegt werden um das Spinnvlies zu bilden.

Unter Luftdurchlässigkeit des Spinnvlieses wird die Luftdurchlässigkeit gemäß ASTM D 737, DIN 53887, EN ISO 9237, WSP 70.1 oder vergleichbaren Normen verstanden.

Unter einem Koagulationsluftstrom wird für die Zwecke der vorliegenden Erfindung ein wasserhaltiges und/oder Koagulationsmittel-enthaltendes Fluid, bspw. Gas, Nebel, Dampf, etc., verstanden.

In einer möglichen Ausführungsform der Erfindung kann die Änderung der Parameter des Koagulationsluftstroms in Abhängigkeit der ermittelten Differenz manuell, bspw. anhand von Tabellen oder Erfahrungswerten erfolgen. In einer weiteren Ausführungsform kann die Änderung der Parameter des Koagulationsluftstroms durch eine automatische oder computergestützte Regelung erfolgen, beispielsweise mittels einem PID-Regler.

Ist der zumindest eine Parameter ausgewählt aus der Gruppe bestehend aus dem Luftdruck, dem Winkel und der Ausgangsposition des Koagulationsluftstroms bzw. der Menge an Koagulationsflüssigkeit im Koagulationsluftstrom, so kann die Zuverlässigkeit und Reproduzierbarkeit des Verfahrens weiter verbessert werden.

Der Winkel des Koagulationsluftstroms kann dabei bevorzugt der zwischen Koagulationsluftstrom und Filamenten eingeschlossene Winkel sein, während die Ausgangsposition des Koagulationsluftstroms bevorzugt der Startpunkt bzw. Ausgangspunkt des Koagulationsluftstroms sein kann.

Über den Luftdruck des Koagulationsluftstroms und ebenso auch über den Winkel bzw. die Ausgangsposition des Koagulationsluftstroms in Bezug auf die Filamente können nämlich im Besonderen die Strömungsverhältnisse im Bereich der Ablage der Filamente zu dem Spinnvlies und somit auch die Verwirbelung der extrudierten, verstreckten und teilweise koagulierten Filamente beeinflusst und bewusst gesteuert werden.

Zudem kann über die Menge an Koagulationsflüssigkeit im Koagulationsluftstrom der Grad der Koagulation der Filamente beeinflusst werden und somit gesteuert werden, ob die Filamente vor deren Ablage mehr oder weniger Verklebungen aufweisen, wobei insbesondere ein höherer Grad an Koagulation zu weniger Verklebungen und schließlich zu einer homogeneren, dichteren Ablage der Filamente im Spinnvlies führt.

Durch Änderung der Strömungsverhältnisse und/oder der Verwirbelung der Filamente und/oder der Verklebung der Filamente wird deren Orientierung vor der Ablage derart beeinflusst, dass in weiterer Folge die innere Struktur, also die Wirrlage der Filamente, des Spinnvlieses und somit die Luftdurchlässigkeit geändert wird.

Die Reproduzierbarkeit des Verfahrens kann weiter verbessert werden, wenn der Koagulationsluftstrom in Abhängigkeit des zumindest einen Parameters mittels einer Koagulationseinrichtung gesteuert wird. So kann nämlich eine zumindest teilweise automatisierte Anpassung des Koagulationsluftstroms durch die Koagulationseinrichtung anhand der Parameter erreicht werden.

Dabei kann die Koagulationseinrichtung zumindest eine im Austrittswinkel und/oder in ihrer Position veränderbare Düse und eine Dosiereinrichtung aufweisen. Der Koagulationsluftstrom kann so über die Düse zuverlässig gesteuert werden, da die Düse den Austrittsluftdruck, den Austrittswinkel und die Position des Koagulationsluftstroms bzw. dessen Abstand zu den extrudierten Filamenten beliebig anpassen kann. Zudem kann dabei die Menge an Koagulationsflüssigkeit im Koagulationsluftstrom über eine der Düse zugeordnete Dosiereinrichtung gesteuert werden. Die Koagulationseinrichtung kann somit reproduzierbar den Koagulationsluftstrom anhand der Parameter steuern.

Die Düsen der Koagulationseinrichtung können zur Erzeugung und Steuerung des Koagulationsluftstroms bevorzugt Einstoffdüsen sein, wobei insbesondere der Druck 1 bar bis 50 bar betragen kann. Weiter bevorzugt können die Düsen der Koagulationseinrichtung zur Erzeugung und Steuerung des Koagulationsluftstroms Zweistoffdüsen sein, wobei insbesondere der Druck 1 bar bis 20 bar betragen kann. Sowohl Einstoff- als auch Zweistoffdüsen ermöglichen erfindungsgemäß eine zuverlässige Einstellung der Feinheit der Zerstäubung der Koagulationsflüssigkeit und damit eine zuverlässige Regelung des Koagulationsluftstroms.

Durchläuft das Spinnvlies vor dem Ermitteln der Ist-Luftdurchlässigkeit zumindest einen der Schritte enthaltend eine Wäsche, eine Wasserstrahlverfestigung und eine Trocknung, so kann die Zuverlässigkeit und Reproduzierbarkeit des Verfahrens weiter erhöht werden. Insbesondere die Luftdurchlässigkeit des Spinnvlieses kann nämlich durch Nachbehandlungsschritte wie beispielsweise eine Wäsche oder eine Wasserstrahlverfestigung bzw. eine Trocknung weiter beeinflusst werden. Indem die Ermittlung der Ist-Luftdurchlässigkeit diesen Behandlungsschritten nachgelagert ist, können Einflüsse solcher Schritte auf die gewünschte Luftdurchlässigkeit des Spinnvlieses vermieden werden.

Das Verfahren kann weiter verbessert werden, wenn die Ist-Luftdurchlässigkeit mittels einer Detektionseinrichtung gemessen wird. Eine solche Detektionseinrichtung kann vorzugsweise eine online-Detektionseinrichtung sein, welche das Spinnvlies im laufenden Herstellungsverfahren kontinuierlich überwacht, ohne dass das Verfahren unterbrochen werden muss. Eine solche Detektionseinrichtung kann insbesondere ein Messgerät oder ein Prüfgerät sein, welches zur zerstörungsfreien Bestimmung der Luftdurchlässigkeit des Spinnvlieses geeignet ist.

Zudem kann mittels einer mit der Detektionseinrichtung verbundenen Steuereinheit die Differenz zwischen der durch die Detektionseinrichtung gemessenen Ist-Luftdurchlässigkeit mit der in der Steuereinheit hinterlegten Soll-Luftdurchlässigkeit ermittelt werden. Durch die Steuereinheit kann insbesondere eine automatisierte Ermittlung der Differenz zwischen Ist- und Soll-Luftdurchlässigkeit erfolgen, wobei die Steuereinheit dabei auf eine, etwa in einem Speicher, hinterlegte Soll-Luftdurchlässigkeit zurückgreifen kann. Die Steuereinheit kann dabei beispielsweise eine autonome Steuereinheit, wie etwa ein Mikroprozessor, Computer, mobiles Endgerät, etc. sein, oder als Teil eines vorhandenen Leitsystems bzw. Steuersystems in ein solches integriert sein.

Weiters kann die Steuereinheit in Abhängigkeit der ermittelten Differenz ein Steuersignal zur Änderung eines Parameters des Koagulationsluftstroms an eine den Koagulationsluftstrom regelnde Koagulationseinrichtung ausgeben. Dabei ist die Steuereinheit mit der Koagulationseinrichtung verbunden und kann beispielsweise in Echtzeit nach dem Ermitteln der Differenz zwischen Ist- und Soll-Luftdurchlässigkeit die Parameter des Koagulationsluftstroms und somit die Luftdurchlässigkeit des Spinnvlieses anpassen. Ein vollständiges Regelsystem für die Luftdurchlässigkeit des Spinnvlieses kann somit geschaffen werden.

Da im Falle der Herstellung cellulosischer Spinnvliese die verwendeten Spinnmassen eine hohe Verdünnung mit Cellulose-Gehalten von nur 3 bis 17% aufweisen, wird bei cellulosischen Spinnvliestechnologien mehr Prozessluft pro kg Produkt gegenüber thermoplastischen Spinnvliestechnologien benötigt. Dies führt bei gleicher Produktivität im Vergleich zu thermoplastischen Spinnvliesanlagen zu einem größeren Bedarf an Verstreckungsluft sowie Koagulations- und Lösungsmittel, welche nach der Extrusion der Formkörper abgeführt werden müssen. Es prallt also mehr Prozessluft mit höherer Geschwindigkeit auf die gleiche Ablagefläche und diese Prozessluft ist auch noch mit viel Flüssigkeit beladen. Dies führt zu der Notwendigkeit größerer und massiverer Anlagen, als die bei thermoplastischen Spinnvlies- oder Meltblown-Verfahren verwendeten Extruder. Die massiven Lyocell-Spinnmasseleitungen müssen zudem hohe Drücke aushalten und sind auch nicht flexibel oder schnell anpassbar. Eine Höhenverstellung der Ablage und/oder der Spinndüsen zur Änderung der mechanischen und inneren Eigenschaften des Spinnvlieses, kommt im Fall cellulosischer Spinnvliese demnach aufgrund der hohen technischen Komplexität nicht in Betracht.

Das erfindungsgemäße Verfahren eignet sich demnach besonders für die Herstellung eines cellulosischen Spinnvlieses, wobei die Spinnmasse eine Lyocell-Spinnmasse, also eine Lösung aus Cellulose in einem Direktlösemittel für Cellulose ist. Ein solches Direktlösemittel für Cellulose ist ein Lösemittel, in dem die Cellulose in nicht-derivatisierter Form gelöst vorliegt. Dies kann bevorzugt ein Gemisch aus einem tertiären Aminoxid, wie etwa NMMO (N-Methylmorpholin-N-oxid), und Wasser sein. Alternativ eignen sich als Direktlösemittel allerdings beispielsweise auch ionische Flüssigkeiten, bzw. Mischungen mit Wasser. Der Gehalt an Cellulose in der Spinnmasse kann dabei 3 Gew.-% bis 17 Gew.-%, in bevorzugten Ausführungsvarianten 5 Gew.-% bis 15 Gew.-%, und in besonders bevorzugen Ausführungsvarianten 6 Gew.-% bis 14 Gew.-%, betragen.

Überraschend hat sich gezeigt, dass der Abstand zwischen Spinndüse und Ablagefläche bei dem erfindungsgemäßen cellulosischen Spinnvliesverfahren deutlich höher sein kann als bei thermoplastischen Spinnvliesverfahren, ohne dass die Qualität des Spinnvlieses negativ beeinträchtigt wird.

Beträgt nun der Abstand zwischen Spinndüse und Ablagefläche zur Ablage der Filamente zwischen 100 mm und 5000 mm, so kann nämlich genügend Platz zwischen Spinndüse und Ablagefläche geschaffen werden, um die Koagulationseinrichtung zur Erzeugung eines steuerbaren Koagulationsluftstroms im Bereich unterhalb der Spinndüse zu platzieren. Der Abstand zwischen Spinndüse und Ablagefläche beträgt bevorzugt zwischen 300 mm und 4000 mm, besonders bevorzugt zwischen 500 mm und 2000 mm. Die Position und/oder der Winkel einer oder mehrerer Düsen der Koagulationseinrichtung können dabei zuverlässig verstellt und so der Koagulationsluftstrom auf die Filamente gerichtet werden.

Zudem wurde überraschenderweise festgestellt, dass das Spinnvlies trotz des großen Abstands zwischen Spinndüse und Ablagefläche gleichmäßig ohne Spinnfehler abgelegt wird. Durch den großen Abstand gegenüber thermoplastischen Spinnvlies-Verfahren kann zudem zuverlässig eine Zerstörung des Spinnvlieses im Verstreckungsluftstrom vermieden werden, da ansonsten bei kleinen Abständen durch die hohen Verstreckungsluftmengen bei erfindungsgemäßen Verfahren zur Herstellung cellulosischer Spinnvliese Turbulenzen im Verstreckungsluftstrom auftreten können.

Es hat sich weiter herausgestellt, dass eine Veränderung des Abstandes zwischen Spinndüse und Ablagefläche im Gegensatz zu thermoplastischen Spinnvlies-Verfahren, bei dem erfindungsgemäßen Verfahren zur Herstellung cellulosischer Spinnvliese mittel Lyocell-Spinnmasse, nur eine sehr geringe Auswirkung auf die innere Struktur und auf die Luftdurchlässigkeit des Spinnvlieses hat.

Der Durchsatz an Cellulose pro Spinndüse kann vorzugsweise zwischen 5 kg/h pro Meter Spinndüsen-Länge und 500 kg/h pro Meter Spinndüsen-Länge betragen.

Eine besonders zuverlässige Koagulation der extrudierten Filamente kann dabei erreicht werden, wenn die Koagulationsflüssigkeit ein Gemisch aus Wasser und einem Direktlösemittel für Cellulose, ist. Insbesondere kann die Koagulationsflüssigkeit dabei ein Gemisch aus vollentsaltztem Wasser und 0 Gew.-% bis 40 Gew.-% NMMO, bevorzugt 10 Gew.-% bis 30 Gew.-% NMMO, besonders bevorzugt 15 Gew.-% bis 25 Gew.-% NMMO, sein.

Die Menge an Koagulationsflüssigkeit im Koagulationsluftstrom kann dabei vorzugsweise 50 l/h bis 10.000 l/h, weiter bevorzugt 100 l/h bis 5.000 l/h, besonders bevorzugt 500 l/h bis 2.500 l/h pro Meter Koagulations-Düse betragen.

Zur Verstreckung der Filamente kann die Spinndüse eine Verstreckungseinrichtung aufweisen, welche einen Verstreckungsluftstrom aus der Spinndüse auf die extrudierten Filamente richtet. Insbesondere kann der Verstreckungsluftstrom einen Druck von 0,05 bar bis 5 bar, bevorzugt 0,1 bar bis 3 bar, besonders bevorzugt 0,2 bar bis 1 bar, aufweisen. Insbesondere kann der Verstreckungsluftstrom weiters eine Temperatur von 20 °C bis 200 °C, bevorzugt von 60 °C bis 160 °C, besonders bevorzugt von 80 °C bis 140 °C, aufweisen.

Die Erfindung hat sich außerdem die Aufgabe gestellt, eine Vorrichtung zur Herstellung von cellulosischem Spinnvlies gemäß dem Oberbegriff des Anspruchs 11 bereitzustellen, welche technisch und konstruktiv einfach eine Steuerung bzw. Einstellung der Luftdurchlässigkeit des Spinnvlieses ermöglicht.

Die gestellte Aufgabe wird durch die kennzeichnenden Merkmale des Anspruchs 11 gelöst.

Weist die Vorrichtung eine Detektionseinrichtung zur Messung der Ist-Luftdurchlässigkeit des Spinnvlieses auf, wobei die Koagulationseinrichtung mit der Detektionseinrichtung verbunden ist, um den Koagulationsluftstrom in Abhängigkeit der Ist-Luftdurchlässigkeit zu steuern, so kann nämlich eine direkte Feedback-Verbindung zwischen der gemessenen Ist-Luftdurchlässigkeit des Spinnvlieses und der Koagulationseinrichtung geschaffen werden.

Dadurch können beispielsweise Abweichungen der Ist-Luftdurchlässigkeit von einer gewünschten Soll-Luftdurchlässigkeit rasch erkannt werden und durch entsprechende Steuerung der Koagulationseinrichtung eine Anpassung des Koagulationsluftstroms erreicht werden, wodurch die Luftdurchlässigkeit des Spinnvlieses in eine gewünschte Richtung angepasst werden kann. Die Detektionseinrichtung ermöglicht zudem eine rasche online-Messung der Ist-Luftdurchlässigkeit im laufenden Produktionsverfahren, und kann durch die direkte Verbindung zur Koagulationseinrichtung ohne große Verzögerung auf Änderungen im Produktionsprozess reagieren. Eine technisch und konstruktiv besonders einfache Vorrichtung zur Herstellung eines Spinnvlieses kann so geschaffen werden, welche außerdem eine zuverlässige Einstellung der Luftdurchlässigkeit des Spinnvlieses ermöglicht.

Ist in der Vorrichtung weiters die Koagulationseinrichtung über eine Steuereinheit mit der Detektionseinrichtung verbunden, wobei in der Steuereinheit eine Soll-Luftdurchlässigkeit hinterlegt ist, so kann die Zuverlässigkeit der Vorrichtung weiter verbessert werden, da Abweichungen der Ist-Luftdurchlässigkeit von der Soll-Luftdurchlässigkeit durch die Steuereinheit direkte ermittelt werden können und die Koagulationseinrichtung in Abhängigkeit dieser Abweichungen gesteuert werden kann.

Ist die Detektionseinrichtung zwischen der Spinndüse und einer Aufwicklung des Spinnvlieses angeordnet, so kann eine unmittelbare Messung der Ist-Luftdurchlässigkeit während des Herstellungsprozesses erfolgen, wodurch unmittelbar auf Abweichungen der Luftdurchlässigkeit reagiert werden kann. Die Detektionseinrichtung kann dabei vorzugsweise etwa zwischen der Spinndüse und einer Wäsche, zwischen einer Wäsche und einer Trocknung, zwischen einer Wäsche und einer Wasserstrahlverfestigung, zwischen einer Wasserstrahlverfestigung und einer Trockung oder zwischen einer Trocknung und einer Aufwicklung des Spinnvlieses, jeweils bezogen auf die Transportrichtung des Förderbandes, angeordnet sein.

Vorzugsweise ist die Detektionseinrichtung dabei unmittelbar nach der Trocknung des Spinnvlieses angeordnet, da die gemessenen Ist-Luftdurchlässigkeiten nach der Trocknung die tatsächliche Luftdurchlässigkeit des fertigen Spinnvlieses zuverlässig widerspiegeln. Die Trocknung kann dabei mehrere Trocknungsschritte aufweisen, wobei die Detektionseinrichtung insbesondere nach dem letzten Trocknungsschritt angeordnet ist. Eine besonders zuverlässige Vorrichtung kann damit geschaffen werden.

Bei den Spinndüsen des erfindungsgemäßen Verfahrens, bzw. der erfindungsgemäßen Vorrichtung können vorzugsweise, aus dem Stand der Technik bekannte (US 3,825,380 A, US 4,380,570 A, WO 2019/068764 A1) einreihige Spaltdüsen, mehrreihige Nadeldüsen oder bevorzugt Säulendüsen mit Längen von 0,1 m bis 6 m zum Einsatz kommen.

### Kurzbeschreibung der Zeichnungen

Im Folgenden werden die Ausführungsvarianten der Erfindung anhand der Zeichnungen näher beschrieben. Es zeigen:
- Fig. 1: eine schematische Darstellung des Verfahrensablaufs gemäß einer ersten Ausführungsvariante des Verfahrens,
- Fig. 2a: eine schematische Detailansicht der Filamente-Extrusion gemäß des Verfahrens in Fig. 1 in einem ersten Zustand, und
- Fig. 2b: eine schematische Detailansicht der Filamente-Extrusion gemäß des Verfahrens in Fig. 1 in einem zweiten Zustand.

### Wege zur Ausführung der Erfindung

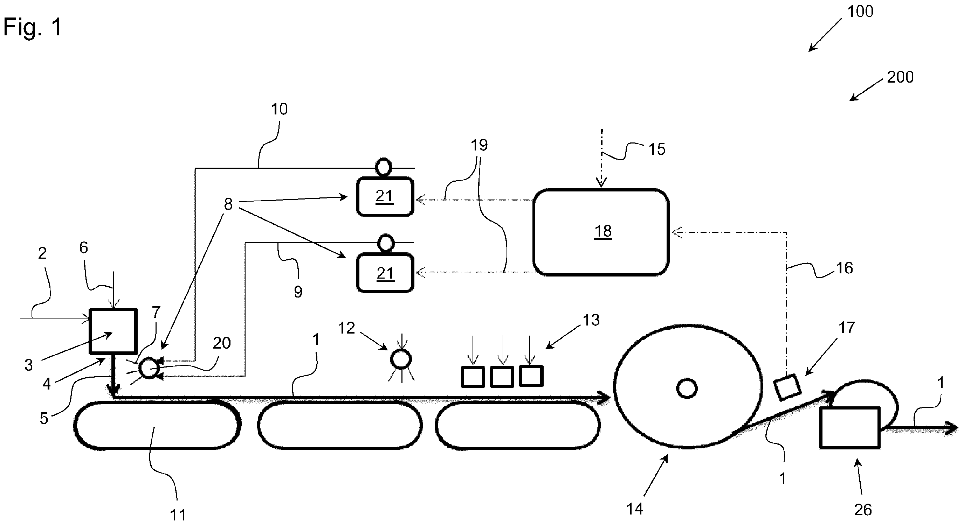

Fig. 1 zeigt eine schematische Darstellung des Verfahrens 100 zur Herstellung von cellulosischem Spinnvlies 1 und eine entsprechende Vorrichtung 200, anhand derer das Verfahren 100 durchgeführt wird. In einem ersten Verfahrensschritt wird dabei eine Spinnmasse 2 aus einem cellulosischen Rohmaterial erzeugt und an eine oder mehrere Spinndüsen 3 der Vorrichtung 200 zugeführt. Das cellulosische Rohmaterial zur Herstellung der Spinnmasse 2, welche in den Figuren nicht näher dargestellt ist, kann dabei ein konventioneller Zellstoff aus Holz oder anderen pflanzlichen Ausgangsstoffen sein. Es ist aber ebenso denkbar, dass das cellulosische Rohmaterial aus Produktionsabfällen des Spinnvlieses oder recycelten Textilien besteht.

Die Spinnmasse 2 wird dann in der Spinndüse 3 durch eine Vielzahl von Düsenlöchern 4 zu den Filamenten 5 extrudiert. Durch Zufuhr von Verstreckungsluft 6 an eine Verstreckungseinheit in der Spinndüse 3 werden die Filamente 5 beim Austritt aus der Spinndüse 3 mittels eines Verstreckungsluftstroms verstreckt. Die Verstreckungsluft 6 kann dabei aus Öffnungen in der Spinndüse 3 zwischen den Düsenlöchern 4 austreten und als Verstreckungsluftstrom direkt auf die extrudierten Filamente 5 gerichtet werden.

Die extrudierten Filamente 5 werden nach oder schon während des Verstreckens mit einem Koagulationsluftstrom 7 beaufschlagt, welcher durch eine Koagulationseinrichtung 8 generiert wird. Dazu werden der Koagulationseinrichtung 8 sowohl eine Koagulationsluft 9 als auch eine Koagulationsflüssigkeit 10 zugeführt, wobei der von der Koagulationseinrichtung 8 erzeugte Koagulationsluftstrom 7 die Koagulationsflüssigkeit 10 aufweist. Durch Kontakt der Filamente 5 mit dem Koagulationsluftstrom 7 und der darin enthaltenen Koagulationsflüssigkeit 10 werden die Filamente 5 zumindest teilweise ausgefällt, was insbesondere Verklebungen zwischen den einzelnen extrudierten Filamenten 5 reduziert.

Die verstreckten und zumindest teilweise ausgefällten Filamente 5 werden dann zur Bildung des Spinnvlieses 1 in Wirrlage auf einem Förderband 11 abgelegt. Das Spinnvlies 1 wird dann zu weiteren Bearbeitungsschritten 12, 13, 14 mit dem Förderband 11 weitertransportiert.

Um die Luftdurchlässigkeit des Spinnvlieses 1 zu steuern, bzw. um ein Spinnvlies 1 mit definierter Soll-Luftdurchlässigkeit 15 zu erhalten, wird bevorzugt die Ist-Luftdurchlässigkeit 16 des Spinnvlieses 1 mittels einer Detektionseinrichtung 17 gemessen und an eine mit der Detektionseinrichtung 17 verbundene Steuereinheit 18 übergeben. Die Steuereinheit 18 ermittelt dann eine Differenz zwischen der gemessenen Ist-Luftdurchlässigkeit 16 und der Soll-Luftdurchlässigkeit 15, wobei anhand der Differenz der Koagulationsluftstrom 7 von der Koagulationseinrichtung 8 gesteuert wird.

Die Koagulationseinrichtung 8 ist dazu mit der Steuereinheit 18 verbunden, welche Steuersignale 19 an die Koagulationseinrichtung 8 sendet, um zumindest einen Parameter des Koagulationsluftstroms 7, nämlich den Luftdruck, den Winkel, und der Ausgangsposition, oder der Menge an Koagulationsflüssigkeit 10 im Koagulationsluftstrom 7, zu verändern.

Die Koagulationseinrichtung 8 weist zur Steuerung des Koagulationsluftstrom 7 eine im Austrittswinkel und ihrer Position veränderbare Düse 20 auf. Der Düse 20 sind Dosiereinrichtungen 21 einerseits für die Koagulationsflüssigkeit 10, zur Steuerung der Menge an Koagulationsflüssigkeit 10 im Koagulationsluftstrom 7, und andererseits für die Koagulationsluft 9, zur Steuerung des Drucks, zugeordnet. Es ist damit eine Feedback-Schleife zwischen der Koagulationseinrichtung 8 und Detektionseinrichtung 17 geschaffen, welche vollautomatisch durch Regelung des Koagulationsluftstroms 7 eine Soll-Luftdurchlässigkeit 15 im fertigen Spinnvlies 1 erreichen und konstant halten kann. Ein solches Konstanthalten der Luftdurchlässigkeit kann sich auch im Falle von Schwankungen im Cellulose-Rohstoff besonders vorteilhaft auszeichnen.

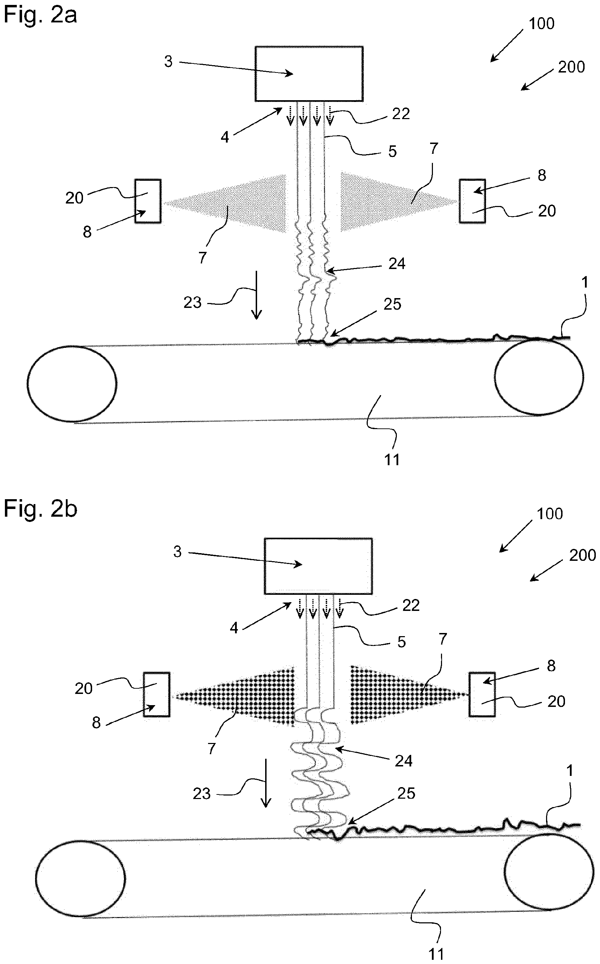

Die Steuerung der Luftdurchlässigkeit des Spinnvlieses 1 während der Extrusion der Formkörper 5 aus der Spinndüse 3 ist in den Fig. 2a und 2b im Detail dargestellt. Fig. 2a zeigt den Bereich der Spinndüse 3 der Vorrichtung 200 aus Fig. 1, wobei die Formkörper 5 aus den Düsenlöchern 4 der Spinndüse 3 extrudiert werden und durch den Verstreckungsluftstrom 22 in Extrusionsrichtung 23 verstreckt werden.

Die verstreckten Filamente 5 passieren dann den Koagulationsluftstrom 7, welcher aus den Düsen 20 der Koagulationseinrichtung 8 generiert wird. Die Düsen 20 können dabei einander gegenüberliegend, beidseitig der Spinndüse 3, angeordnet sein. In weiteren, nicht dargestellten Ausführungsformen ist auch möglich, dass die Düsen 20 ringförmig um die extrudierten Filamente 5 angeordnet sind, oder dass mehrere Düsen 20 um die extrudierten Filamente 5 angeordnet sind.

In Abhängigkeit der Parameter des Koagulationsluftstroms 7 werden dann Verwirbelungen 24 in den Filamenten 5 erzeugt, welche die Ablage der Filamente 5 am Förderband 11 beeinflussen. So führt beispielsweise ein höherer Luftdruck des Koagulationsluftstroms 7 zu einer stärkeren Verwirbelung 24 der Filamente 5, wie dies in Fig. 2b dargestellt ist. Zudem kann etwa die Menge an Koagulationsflüssigkeit 10 die Verklebungen zwischen den Filamenten 5 beeinflussen. Dies führt schließlich auch zu einer geänderten Wirrlage 25 der Filamente 5 im fertig geformten Spinnvlies 1, welche wiederum die Luftdurchlässigkeit beeinflusst.

In einer weiteren Ausführungsvariante, welche in den Figuren nicht näher dargestellt ist, sind die Düsen 20 der Koagulationseinrichtung 8 als Einstoffdüsen ausgebildet, welche eine zuverlässige Zerstäubung der Koagulationsflüssigkeit 10 in der Koagulationsluft 9 ermöglichen.

In einer wieder weiteren Ausführungsvariante, welche in den Figuren nicht näher dargestellt ist, sind die Düsen 20 der Koagulationseinrichtung 8 als Zweistoffdüsen ausgebildet, welche ebenso eine zuverlässige Zerstäubung der Koagulationsflüssigkeit 10 in der Koagulationsluft 9 ermöglichen.

Die Düsen 20 sind dabei in einer weiteren Ausführungsform als Düsenbalken ausgeführt, wobei sowohl der Austrittswinkel, als auch die horizontale und vertikale Position des Düsenbalkens während dem Betrieb verstellt werden können.

In einer anderen, in den Figuren nicht näher gezeigten Ausführungsvariante ist den Düsen 20 jeweils eine Positioniereinrichtung zugeordnet, um den Winkel und die Position der Düsen 20 zu steuern. Diese Steuerung kann ebenso über die Steuereinheit 18 erfolgen. Die Positioniereinrichtung kann die Düsen 20 dabei etwa über Elektromotoren in ihrem Winkel und ihrer Position gezielt ausrichten, so dass der Koagulationsluftstrom 7 mehr in Richtung Spinndüsen 3 oder mehr in Extrusionsrichtung 23 gerichtet werden kann, bzw. gezielt gegenüber den Filamenten 5 positioniert werden kann.

Nach der Ablage der Filamente 5 zu dem Spinnvlies 1 am Förderband 11 durchläuft das Spinnvlies noch weitere Nachbearbeitungsschritte. Zunächst durchläuft das Spinnvlies 1 eine Wäsche 12, welche die Rückstände des Direktlösemittels aus dem Spinnvlies 1 entfernt. Des Weiteren durchläuft das Spinnvlies 1 eine Wasserstrahlverfestigung 13, welche die innere Struktur des Spinnvlieses 1 zusätzlich verändern kann. Schließlich kann das Spinnvlies 1 eine Trocknung 14 durchlaufen, um ein fertiges Spinnvlies 1 zu erhalten, wobei das Verfahren 100 durch optionales Aufwickeln 26 und/oder Verpacken abgeschlossen wird.

Die Detektionseinrichtung 17 kann gemäß verschiedenen Ausführungsvarianten an verschiedenen Stellen der Vorrichtung 200 bzw. des Verfahrens 100 vorgesehen sein. So ist die Detektionseinrichtung 17 - wie in Fig. 1 gezeigt - unmittelbar nach der Trocknung 14 des Spinnvlieses 1, d.h. ohne dazwischenliegende Bearbeitungs- oder Verarbeitungsschritte, angeordnet. Dadurch kann die Detektionseinrichtung 17 die Ist-Luftdurchlässigkeit 16 des fertigen Spinnvlieses 1 messen, und so weitere Veränderungen durch nachgelagerte Verarbeitungsschritte ausschließen. Insbesondere durch eine Wasserstrahlverfestigung 13 kann, wie zuvor erwähnt, die innere Struktur und somit auch die Luftdurchlässigkeit des Spinnvlieses 1 weiter verändert werden. Durch die Anordnung der Detektionseinrichtung 17 nach der Wasserstrahlverfestigung 13, bzw. im Besonderen nach der Trocknung 14, können die Auswirkungen der Wasserstrahlverfestigung 13 durch die Einstellung der Luftdurchlässigkeit über den Koagulationsluftstrom 7 kompensiert werden.

In weiteren Ausführungsvarianten kann die Detektionseinrichtung 17 allerdings auch beispielsweise vor der Wäsche 12, zwischen Wäsche 12 und Wasserstrahlverfestigung 13 oder zwischen Wasserstrahlverfestigung 13 und Trocknung 14 angeordnet sein.

In einer weiteren Ausführungsvariante, welche in den Figuren nicht näher dargestellt ist, kann die Vorrichtung 200, 201 bzw. das Verfahren 100, 101 zumindest zwei in Förderrichtung des Förderbands 11 hintereinander angeordnete Spinndüsen 3 aufweisen, wobei jeweils aus zumindest einer ersten Spinndüse 3 und einer zweiten Spinndüse Filamente 5 extrudiert und verstreckt werden und wobei die Filamente 5 der ersten Spinndüse 3 am Förderband 11 zur Bildung eines ersten Spinnvlies 1 abgelegt werden und die Filamente der zweiten Spinndüse am Förderband 11 zur Bildung eines zweiten Spinnvlieses abgelegt werden. Das zweite Spinnvlies wird dabei über dem ersten Spinnvlies 1 am Förderband 11 abgelegt, um ein mehrlagiges Spinnvlies zu bilden. In dem mehrlagigen Spinnvlies sind das erste und zweite Spinnvlies 1 lösbar oder dauerhaft miteinander verbunden.

Das mehrlagige Spinnvlies kann auch in sinngemäß gleicher Weise durch das Übereinanderlegen von drei oder mehr Spinnvliesen aus drei oder mehr Spinndüsen gebildet werden.

In einer weiteren Ausführungsvariante werden das erste und zweite Spinnvlies 1 durch die Wasserstrahlverfestigung 13 dauerhaft zu dem mehrlagigen Spinnvlies miteinander verbunden.

In einer anderen, alternativen Ausführungsvariante kann das mehrlagige Spinnvlies in einem weiteren Verfahrensschritt, vorzugsweise nach der Wäsche 12, wieder in das zumindest erste und zweite Spinnvlies 1 aufgetrennt werden.

Das erste und zweite Spinnvlies 1 können in dem mehrlagigen Spinnvlies jeweils unterschiedliche Luftdurchlässigkeiten aufweisen und somit ein mehrlagiges Spinnvlies 1 mit im Querschnitt veränderlicher Luftdurchlässigkeit bilden. Dies kann in einer Ausführungsvariante erreicht werden, indem jeder Spinndüse 3 eine Koagulationseinrichtung 8 zugeordnet ist, welche den Koagulationsluftstrom 7 für jede Spinndüse 3 getrennt einstellen kann. Ein solches mehrlagiges Spinnvlies 1 kann sich insbesondere für Anwendungen in Gas- und Flüssigkeitsfiltern, Hochleistungsfiltern oder dergleichen eignen.

### Beispiele

Im Folgenden wird das erfindungsgemäße Verfahren anhand mehrerer Beispiele dargestellt. Dabei wurden jeweils Spinnvliese gemäß dem gegenständlichen Verfahren hergestellt und die Luftdurchlässigkeiten mittels einer Detektionseinrichtung gemessen.

Als Detektionseinrichtung zur Messung der Luftdurchlässigkeiten der Spinnvliese wurde in allen Beispielen ein TEXTEST FX3340 MinAir Luftdurchlässigkeits-Prüfgerät verwendet. Dabei wurden die Einstellungen der Detektionseinrichtung so gewählt, dass die Luftdurchlässigkeiten gemäß ISO 9237:1995 (ÖNORM EN ISO 9237: 1995 11 01) gemessen wurden.

Es wurden in den Beispielen jeweils cellulosische Spinnvliese aus einer Lyocell-Spinnmasse hergestellt, wobei als Spinnmasse eine Lösung von Cellulose in einer Mischung aus Wasser und NMMO verwendet wurde.

Der Cellulosedurchsatz pro Spinndüse betrug in allen Beispielen 300 kg/h/m. Der Abstand zwischen Spinndüse und Ablage (DCD / "Die Collector Distance") wurde in allen Beispielen konstant gehalten und betrug jeweils 1000 mm. Der Verstreckungsluftdruck des Verstreckungsluftstroms betrug in allen Beispielen jeweils 0,5 bar.

### Beispiel 1:

In einem ersten Beispiel wurden die Spinnvliese wie zuvor beschrieben anhand des erfindungsgemäßen Verfahrens hergestellt. Die hergestellten Spinnvliese wiesen dabei Flächengewichte zwischen 10 und 100 g/m² auf. Dabei wurde der Luftdruck des Koagulationsluftstroms jeweils mit 1,5 bar konstant gehalten und die Menge an Koagulationsflüssigkeit im Koagulationsluftstrom zu allen Flächengewichten jeweils zwischen 500 l/h und 1000 l/h variiert. Die Luftdurchlässigkeiten wurden dann mittels der zuvor beschriebenen Methode bestimmt.

Tabelle 1 zeigt die gemessenen Luftdurchlässigkeiten der gemäß Beispiel 1 hergestellten Spinnvliese. Dabei zeigt sich, dass die Variation der Menge an Koagulationsflüssigkeit im Koagulationsluftstrom, trotz ansonsten gleicher Prozessparameter, einen gravierenden Einfluss auf die Luftdurchlässigkeit der erzeugten Spinnvliese hat.

### Beispiel 2:

In einem zweiten Beispiel wurden die Spinnvliese wieder wie eingangs beschrieben anhand des erfindungsgemäßen Verfahrens hergestellt. Die hergestellten Spinnvliese wiesen dabei ebenso Flächengewichte zwischen 10 und 100 g/m² auf. Im Gegensatz zu Beispiel 1 wurde die Menge an Koagulationsflüssigkeit im Koagulationsluftstrom jeweils mit 750 l/h konstant gehalten und der Luftdruck des Koagulationsluftstroms zu allen Flächengewichten jeweils zwischen 1,0 und 2,0 bar variiert. Die Luftdurchlässigkeiten wurden dann mittels der zuvor beschriebenen Methode bestimmt.

Tabelle 2 zeigt die gemessenen Luftdurchlässigkeiten der gemäß Beispiel 2 hergestellten Spinnvliese. Dabei zeigt sich, dass die Variation des Luftdrucks des Koagulationsluftstroms, trotz ansonsten gleicher Prozessparameter, einen gravierenden Einfluss auf die Luftdurchlässigkeit der erzeugten Spinnvliese hat.

In den Beispielen 1 und 2 ist demnach demonstriert, dass die Luftdurchlässigkeit des Spinnvlieses durch Veränderung eines Parameters des Koagulationsluftstroms (insbesondere des Luftdrucks und der Menge an Koagulationsflüssigkeit) zuverlässig gesteuert bzw. eingestellt werden kann.

**Tabelle 1: Gemessene Luftdurchlässigkeiten gemäß Beispiel 1**

| Flächengewicht (g/m²) | Luftdruck des Koagulationsluftstroms (bar) | Menge an Koagulationsflüssigkeit (l/h) | Luftdurchlässigkeit (l/m²·s) |
|---|---|---|---|
| 10 | 1,5 | 500 | < 3000 |
| 10 | 1,5 | 750 | 3000 - 5000 |
| 10 | 1,5 | 1000 | > 5000 |
| 20 | 1,5 | 500 | < 2500 |
| 20 | 1,5 | 750 | 2500 - 4500 |
| 20 | 1,5 | 1000 | > 4500 |
| 30 | 1,5 | 500 | <2000 |
| 30 | 1,5 | 750 | 2000 - 4000 |
| 30 | 1,5 | 1000 | >4000 |
| 40 | 1,5 | 500 | <1500 |
| 40 | 1,5 | 750 | 1500 - 3500 |
| 40 | 1,5 | 1000 | > 3500 |
| 50 | 1,5 | 500 | <1000 |
| 50 | 1,5 | 750 | 1000 - 3000 |
| 50 | 1,5 | 1000 | >3000 |
| 100 | 1,5 | 500 | <500 |
| 100 | 1,5 | 750 | 500 - 2500 |
| 100 | 1,5 | 1000 | >2500 |

**Tabelle 2: Gemessene Luftdurchlässigkeiten gemäß Beispiel 2**

| Flächengewicht (g/m²) | Menge an Koagulationsflüssigkeit (l/h) | Luftdruck des Koagulationsluftstroms (bar) | Luftdurchlässigkeit (l/m²·s) |
|---|---|---|---|
| 10 | 750 | 1,0 | < 3000 |
| 10 | 750 | 1,5 | 3000 - 5000 |
| 10 | 750 | 2,0 | > 5000 |
| 20 | 750 | 1,0 | < 2500 |
| 20 | 750 | 1,5 | 2500 - 4500 |
| 20 | 750 | 2,0 | > 4500 |
| 30 | 750 | 1,0 | <2000 |
| 30 | 750 | 1,5 | 2000 - 4000 |
| 30 | 750 | 2,0 | >4000 |
| 40 | 750 | 1,0 | <1500 |
| 40 | 750 | 1,5 | 1500 - 3500 |
| 40 | 750 | 2,0 | > 3500 |
| 50 | 750 | 1,0 | <1000 |
| 50 | 750 | 1,5 | 1000 - 3000 |
| 50 | 750 | 2,0 | >3000 |
| 100 | 750 | 1,0 | <500 |
| 100 | 750 | 1,5 | 500 - 2500 |
| 100 | 750 | 2,0 | >2500 |

## Patentansprüche

1. Verfahren zur Herstellung von cellulosischem Spinnvlies (1), bei dem eine Spinnmasse (2) durch eine Vielzahl von Düsenlöchern (4) zu Filamenten (5) extrudiert wird, die Filamente (5) in Extrusionsrichtung (23) verstreckt, durch Beaufschlagung mit einem eine Koagulationsflüssigkeit (10) aufweisenden Koagulationsluftstrom (7) zumindest teilweise ausgefällt und zur Bildung des Spinnvlieses (1) abgelegt werden, **dadurch gekennzeichnet, dass** die Luftdurchlässigkeit des Spinnvlieses (1) anhand zumindest eines Parameters des Koagulationsluftstroms (7) eingestellt wird, indem die Ist-Luftdurchlässigkeit (16) des Spinnvlieses (1) gemessen wird, die Differenz zwischen Ist-Luftdurchlässigkeit (16) und einer vordefinierten Soll-Luftdurchlässigkeit (15) ermittelt wird und in Abhängigkeit der ermittelten Differenz der zumindest eine Parameter des Koagulationsluftstroms (7) verändert wird.

2. Verfahren nach Anspruch 1, **dadurch gekennzeichnet, dass** der zumindest eine Parameter ausgewählt ist aus der Gruppe bestehend aus: dem Luftdruck, dem Winkel und dem Ausgangspunkt des Koagulationsluftstroms (7) und der Menge an Koagulationsflüssigkeit (10) im Koagulationsluftstroms (7).

3. Verfahren nach Anspruch 1 oder 2, **dadurch gekennzeichnet, dass** der Koagulationsluftstrom (7) in Abhängigkeit des zumindest einen Parameters mittels einer Koagulationseinrichtung (8) gesteuert wird.

4. Verfahren nach Anspruch 3, **dadurch gekennzeichnet, dass** die Koagulationseinrichtung (8) zumindest eine im Austrittswinkel und/oder in ihrer Position veränderbare Düse (20) und eine Dosiereinrichtung (21) aufweist, wobei der Koagulationsluftstrom (7) über die Düse (20) gesteuert wird und die Menge an Koagulationsflüssigkeit im Koagulationsluftstrom (7) über die der Düse (20) zugeordnete Dosiereinrichtung (21) gesteuert wird.

5. Verfahren nach einem der Ansprüche 1 bis 4, **dadurch gekennzeichnet, dass** das Spinnvlies (1) vor dem Ermitteln der Ist-Luftdurchlässigkeit (16) zumindest einen der folgenden Schritte durchläuft: eine Wäsche (12), eine Wasserstrahlverfestigung (13), eine Trocknung (14).

6. Verfahren nach einem der Ansprüche 1 bis 5, **dadurch gekennzeichnet, dass** die Ist-Luftdurchlässigkeit (16) mittels einer Detektionseinrichtung (17) gemessen wird.

7. Verfahren nach Anspruch 6, **dadurch gekennzeichnet, dass** mittels einer mit der Detektionseinrichtung (17) verbundenen Steuereinheit (18) die Differenz zwischen der durch die Detektionseinrichtung (17) gemessenen Ist-Luftdurchlässigkeit (16) und der in der Steuereinheit (18) hinterlegten Soll-Luftdurchlässigkeit (15) ermittelt wird.

8. Verfahren nach Anspruch 7, **dadurch gekennzeichnet, dass** die Steuereinheit (18) in Abhängigkeit der ermittelten Differenz zumindest ein Steuersignal (19) zur Änderung eines Parameters des Koagulationsluftstroms (7) an eine den Koagulationsluftstrom (7) regelnde Koagulationseinrichtung (8) ausgibt.

9. Verfahren nach einem der Ansprüche 1 bis 8, **dadurch gekennzeichnet, dass** das Spinnvlies (1) ein cellulosisches Spinnvlies (1), und die Spinnmasse (2) eine Lösung von Cellulose in einem Direktlösemittel, insbesondere einem tertiären Aminoxid, ist.

10. Verfahren nach einem der Ansprüche 1 bis 9, **dadurch gekennzeichnet, dass** die Koagulationsflüssigkeit (10) ein Gemisch aus Wasser und einem Direktlösemittel für Cellulose, insbesondere einem tertiären Aminoxid, ist.

11. Vorrichtung zur Herstellung von cellulosischem Spinnvlies, mit zumindest einer Spinndüse (3) zur Extrusion einer Spinnmasse (2) zu Filamenten (5), wobei die Spinndüse (3) eine Verstreckungseinrichtung zur Verstreckung der extrudierten Filamente (5) mittels eines Verstreckungsluftstroms (6) aufweist, mit einer Koagulationseinrichtung (8) zur Beaufschlagung und zumindest teilweisen Ausfällung der Filamente (5) mit einem eine Koagulationsflüssigkeit (10) aufweisenden Koagulationsluftstrom (7), und mit einem Förderband (11) zur Ablage der Filamente (5) und Bildung des Spinnvlieses (1), **dadurch gekennzeichnet, dass** die Vorrichtung (200) eine Detektionseinrichtung (17) zur Messung der Ist-Luftdurchlässigkeit (16) des Spinnvlieses (1) aufweist, wobei die Koagulationseinrichtung (8) mit der Detektionseinrichtung (17) verbunden ist, um den Koagulationsluftstrom (7) in Abhängigkeit der Ist-Luftdurchlässigkeit (16) zu steuern.

12. Vorrichtung nach Anspruch 11, **dadurch gekennzeichnet, dass** die Koagulationseinrichtung (8) über eine Steuereinheit (18) mit der Detektionseinrichtung (17) verbunden ist, wobei in der Steuereinheit (18) eine Soll-Luftdurchlässigkeit (15) hinterlegt ist.

13. Vorrichtung nach Anspruch 11 oder 12, **dadurch gekennzeichnet, dass** die Detektionseinrichtung (17) in Transportrichtung des Förderbandes (11) zwischen der Spinndüse (3) und einer Aufwicklung des Spinnvlieses (1) angeordnet ist.

14. Vorrichtung nach einem der Ansprüche 11 bis 13, **dadurch gekennzeichnet, dass** die Detektionseinrichtung (17) unmittelbar nach einer Trocknung (14) des Spinnvlieses (1) angeordnet ist.

## Claims

1. A process for the production of cellulosic spunbonded nonwoven (1), wherein a spinning mass (2) is extruded through a plurality of nozzle holes (4) to form filaments (5), the filaments (5) are drawn in the extrusion direction (23), precipitated at least partially by being subjected to a coagulation air stream (7) comprising a coagulation liquid (10) and deposited to form the spunbonded nonwoven (1), **characterized in that** the air permeability of the spunbonded nonwoven (1) is adjusted by means of at least one parameter of the coagulation air stream (7) **in that** the actual air permeability (16) of the spunbonded nonwoven (1) is measured, the difference between the actual air permeability (16) and a predefined target air permeability (15) is determined and the at least one parameter of the coagulation air stream (7) is changed as a function of the determined difference.

2. A process according to claim 1, **characterized in that** the at least one parameter is selected from the group consisting of the air pressure, the angle and the starting point of the coagulation air stream (7) and the amount of coagulation liquid (10) in the coagulation air stream (7).

3. A process according to claim 1 or 2, **characterized in that** the coagulation air stream (7) is controlled as a function of the at least one parameter by means of a coagulation device (8).

4. A process according to claim 3, **characterized in that** the coagulation device (8) comprises at least one nozzle (20) variable with regard to the exit angle and/or its position and a metering device (21), with the coagulation air stream (7) being controlled via the nozzle (20) and the amount of coagulation liquid in the coagulation air stream (7) being controlled via the metering device (21) assigned to the nozzle (20).

5. A process according to any of claims 1 to 4, **characterized in that** the spunbonded nonwoven (1) undergoes at least one of the following steps before the actual air permeability (16) is determined: a washing (12), a hydroentanglement (13), a drying (14).

6. A process according to any of claims 1 to 5, **characterized in that** the actual air permeability (16) is measured using a detection device (17).

7. A process according to claim 6, **characterized in that**, by means of a control unit (18) connected to the detection device (17), the difference between the actual air permeability (16) measured by the detection device (17) and the target air permeability (15) stored in the control unit (18) is determined.

8. A process according to claim 7, **characterized in that** the control unit (18) outputs at least one control signal (19) for changing a parameter of the coagulation air stream (7) to a coagulation device (8) regulating the coagulation air stream (7), as a function of the determined difference.

9. A process according to any of claims 1 to 8, **characterized in that** the spunbonded nonwoven (1) is a cellulosic spunbonded nonwoven (1) and the spinning mass (2) is a solution of cellulose in a direct solvent, more particularly a tertiary amine oxide.

10. A process according to any of claims 1 to 9, **characterized in that** the coagulation liquid (10) is a mixture of water and a direct solvent for cellulose, particularly a tertiary amine oxide.

11. A device for the production of cellulosic spunbonded nonwoven, comprising at least one spinneret (3) for extruding a spinning mass (2) into filaments (5), the spinneret (3) comprising a drawing device for drawing the extruded filaments (5) by means of a drawing air stream (6), comprising a coagulation device (8) for subjecting the filaments (5) to and at least partially precipitating the filaments (5) with a coagulation air stream (7) comprising a coagulation liquid (10), and comprising a conveyor belt (11) for depositing the filaments (5) and forming the spunbonded nonwoven (1), **characterized in that** the device (200) comprises a detection device (17) for measuring the actual air permeability (16) of the spunbonded nonwoven (1), wherein the coagulation device (8) is connected to the detection device (17) in order to control the coagulation air stream (7) as a function of the actual air permeability (16).

12. A device according to claim 11, **characterized in that** the coagulation device (8) is connected to the detection device (17) via a control unit (18), with a target air permeability (15) being stored in the control unit (18).

13. A device according to claim 11 or 12, **characterized in that** the detection device (17) is arranged between the spinneret (3) and a winding of the spunbonded nonwoven (1) in the transport direction of the conveyor belt (11).

14. A process according to any of claims 11 to 13, **characterized in that** the detection device (17) is arranged directly downstream of a drying (14) of the spunbonded nonwoven (1).

## Revendications

1. Procédé de fabrication de non-tissé cellulosique (1), selon lequel une masse à filer (2) est extrudée à travers une multitude de trous de buse (4) pour créer des filaments (5), lesquels filaments (5) sont étirés dans la direction d'extrusion (23), au moins partiellement précipités par exposition à un flux d'air de coagulation (7) contenant un fluide de coagulation (10) et déposés pour former le non-tissé (2), **caractérisé en ce que** la perméabilité à l'air du non-tissé (1) est ajustée au moyen d'au moins un paramètre du flux d'air de coagulation (7), la perméabilité à l'air réelle (16) du non-tissé (1) étant mesurée et la différence entre la perméabilité à l'air réelle (16) et une perméabilité à l'air de consigne (15) prédéfinie étant déterminée et modifiée en fonction de la différence déterminée de l'au moins un paramètre du flux d'air de coagulation (7).

2. Procédé selon la revendication 1, **caractérisé en ce que** l'au moins un paramètre est sélectionné parmi le groupe comprenant la pression d'air, l'angle et le point de sortie du flux d'air de coagulation (7) et la quantité de fluide de coagulation (10) dans le flux d'air de coagulation (7).

3. Procédé selon la revendication 1 ou 2, **caractérisé en ce que** le flux d'air de coagulation (7) est contrôlé en fonction de l'au moins un paramètre au moyen d'un dispositif de coagulation (8).

4. Procédé selon la revendication 3, **caractérisé en ce que** le dispositif de coagulation (8) comporte une buse (20) dont l'angle de sortie et/ou la position peuvent être modifiés et un dispositif de dosage (21), le flux d'air de coagulation (7) étant contrôlé par la buse (20) et la quantité de fluide de coagulation dans le flux d'air de coagulation (7) étant contrôlée par le dispositif de dosage (21) associé à la buse (20).

5. Procédé selon une des revendications 1 à 4, **caractérisé en ce que** le non-tissé (1) est soumis à au moins une des étapes suivantes avant la détermination de la perméabilité à l'air réelle (16) : un lavage (12), une consolidation par jet d'eau (13) et un séchage (14).

6. Procédé selon une des revendications 1 à 5, **caractérisé en ce que** la perméabilité à l'air réelle (16) est mesurée au moyen d'un dispositif de détection (17).

7. Procédé selon la revendication 6, **caractérisé en ce que** la différence entre la perméabilité à l'air réelle (16) mesurée par le dispositif de détection (17) et la perméabilité à l'air de consigne (15) enregistrée dans une unité de commande (18) est déterminée au moyen de cette unité de commande (18) reliée au dispositif de détection (17).

8. Procédé selon la revendication 7, **caractérisé en ce que** l'unité de commande (18) envoie en fonction de la différence déterminée au moins un signal de commande (19) à un dispositif de coagulation (8) régulant le flux d'air de régulation (7) pour modifier un paramètre du flux d'air de coagulation (7).

9. Procédé selon une des revendications 1 à 8, **caractérisé en ce que** le non-tissé (1) est un non-tissé cellulosique (1) et la masse à filer (2) est une solution de cellulose dans un solvant direct, en particulier un amine-oxyde tertiaire.

10. Procédé selon une des revendications 1 à 9, **caractérisé en ce que** le fluide de coagulation (10) est un mélange d'eau et d'un solvant direct pour la cellulose, en particulier d'un amine-oxyde tertiaire.

11. Dispositif de fabrication de non-tissé cellulosique, avec au moins une buse de filage (3) pour extruder une masse à filer (2) pour créer des filaments (5), laquelle buse de filage (3) comporte un dispositif d'étirage pour étirer les filaments (5) extrudés au moyen d'un flux d'air d'étirage (6), avec un dispositif de coagulation (8) pour exposer - et précipiter au moins partiellement - les filaments (5) à un flux d'air de coagulation (7) contenant un fluide de coagulation (10), et avec une bande de transport (11) pour déposer les filaments (5) et former le non-tissé (1), **caractérisé en ce que** ce dispositif (200) comporte un dispositif de détection (17) pour mesurer la perméabilité à l'air réelle (16) du non-tissé (1), le dispositif de coagulation (8) étant relié au système de détection (17) pour contrôler le flux d'air de coagulation (7) en fonction de la perméabilité à l'air réelle (16).

12. Dispositif selon la revendication 11, **caractérisé en ce que** le dispositif de coagulation (8) est relié au dispositif de détection (17) par une unité de commande (18), une perméabilité à l'air de consigne (15) étant enregistrée dans l'unité de commande.

13. Dispositif selon la revendication 11 ou 12, **caractérisé en ce que** le dispositif de détection (17) est disposé, dans le sens de transport de la bande de transport (11), entre la buse de filage (3) et un dispositif de rembobinage du non-tissé (1).

14. Dispositif selon une des revendications 11 à 13, **caractérisé en ce que** le dispositif de détection (17) est disposé immédiatement après un dispositif de séchage (14) du non-tissé (1).
